(19) Europäisches Patentamt
European Patent Office
Office européen des brevets

(11) EP 2 224 538 A1

(12) EUROPEAN PATENT APPLICATION

(43) Date of publication:
01.09.2010 Bulletin 2010/35

(51) Int Cl.:
*H01Q 9/04* (2006.01)          *H02J 7/02* (2006.01)

(21) Application number: 10001285.5

(22) Date of filing: 08.02.2010

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(30) Priority: 27.02.2009 JP 2009045190

(71) Applicant: Sony Corporation
Tokyo 108-0075 (JP)

(72) Inventors:
• Komiyama, Shinji
  Tokyo (JP)
• Fujimaki, Kenichi
  Tokyo (JP)
• Mita, Hiroyuki
  Tokyo (JP)

(74) Representative: Müller - Hoffmann & Partner
Patentanwälte
Innere Wiener Strasse 17
81667 München (DE)

(54) **Electric power supplying apparatus and electric power transmitting system using the same**

(57)      Disclosed herein is an electric power supplying apparatus, including: a resonance circuit having an inductance and a capacitance; and an electric power synthesizing circuit configured to synthesize electric powers of electric signals composed of a plurality of frequency components in a neighborhood frequency band as a frequency band near a resonance frequency decided by the inductance and the capacitance with one another, and output a resulting electric signal obtained through the electric power synthesis to the resonance circuit.

FIG.1

**Description**

BACKGROUND OF THE INVENTION

1. Field of the Invention

The present invention relates to an electric power transmitting system, and more particularly to an electric power supplying apparatus for supplying an electric power by using a magnetic field resonance, and an electric power transmitting system using the same.

2. Description of the Related Art

Heretofore, a technique utilizing an electromagnetic induction has been widely used as an electric power transmitting technique utilized on a wireless basis. On the other hand, in recent years, an electric power transmitting technique utilizing a resonance of either an electric field or a magnetic field has attracted attention. For example, there is proposed an electric power transmitting system using a resonance phenomenon of a magnetic field generated by a resonance circuit composed of a coil and a capacitor. This electric power transmitting system, for example, is disclosed in U.S. Patent Application Publication No. 2007-0222542 (refer to FIG. 3).

SUMMARY OF THE INVENTION

With the existing technique described above, the electric power can be transmitted through the coupling of the magnetic field resonance. In this case, the degree of the coupling caused by the magnetic field resonance between the resonance circuits changes depending on a distance between the resonance circuits. Therefore, the degree of the coupling becomes high and a transmission efficiency of the electric power becomes high as the distance between the resonance circuits becomes shorter. However, when the distance between the resonance circuits becomes too short, the coupling characteristics change from single peak characteristics to double peak characteristics because a gain decreases in a frequency at which a maximum gain of the single characteristics is obtained. A state in which the coupling characteristics become the double peak characteristics in such a manner is called a tight coupling state.

For this reason, when the electric power is transmitted by setting a frequency of an electric signal supplied to the resonance circuit at a frequency corresponding to the maximum gain of the single peak characteristics, there is caused a problem such that when the distance between the resonance circuits becomes too short, the transmission efficiency of the electric power is reduced.

The present invention has been made in the light of such circumstances, and it is therefore desirable to provide an electric power supplying apparatus in which reduction of a transmission efficiency of an electric power in a tight coupling state between resonance circuits can be suppressed, and an electric power transmitting system using the same.

In order to attain the desire described above, according to an embodiment of the present invention, there is provided an electric power supplying apparatus including: a resonance circuit having an inductance and a capacitance; and an electric power synthesizing circuit configured to synthesize electric powers of electric signals composed of a plurality of frequency components in a neighborhood frequency band as a frequency band near a resonance frequency decided by the inductance and the capacitance with one another, and outputting a resulting electric signal obtained through the electric power synthesis to the resonance circuit. As a result, there is provided an operation such that the electric power of the electric signals composed of the plurality of frequency components in the neighborhood frequency band near the resonance frequency of the resonance circuit are synthesized with one another, and the resulting electric signal obtained through the electric power synthesis is outputted to the resonance circuit, thereby generating a magnetic field from the resonance circuit.

In addition, preferably, the electric power supplying apparatus may further include an inductor through which the resonance circuit and the electric power synthesizing circuit are coupled to each other. As a result, there is provided an operation such that impedance matching is obtained between the resonance circuit and the electric power synthesizing circuit. In this case, preferably, the electric power supplying apparatus may further include a plurality of frequency generators configured to generate the electric signals composed of the plurality of frequency components in the neighborhood frequency band, and outputting the electric powers of the electric signals thus generated to the electric power synthesizing circuit. As a result, there is provided an operation such that the electric powers of the electric signals composed of the plurality of frequency components are outputted from the plurality of frequency generators, respectively, to the electric power synthesizing circuit.

In addition, in the case where the electric power supplying apparatus further includes the inductor through which the resonance circuit and the electric power synthesizing circuit are coupled to each other, preferably, the electric power supplying apparatus may further include: a frequency generator configured to generate an electric signal composed of a frequency component in the neighborhood frequency band, and output an electric power of the electric signal thus generated to the electric power synthesizing circuit; and a modulation signal creating circuit configured to create a modulation signal in accordance with which the electric signal generated from the frequency generator is modulated; in which the electric power synthesizing circuit synthesizes the electric powers of the electric signals composed of the plurality of frequency components created in accordance with the electric power of the electric signal outputted from the frequency generator, and the modulation signal created by the modulation signal creating circuit. As a result, there is provided an operation such that the electric powers of the electric signals composed of the plurality of frequency components created in accordance with the electric power of the electric signal outputted from the frequency generator, and the modulation signal created by the modulation signal creating circuit are synthesized with one another by the electric power synthesizing circuit.

In addition, preferably, the neighborhood frequency band may be made a frequency band between a low frequency band side and a high frequency band side each obtained by reducing a maximum gain in a critical coupling state caused by a magnetic field resonance between a resonance circuit and the resonance circuit in an electric power receiving apparatus by a predetermined gain. As a result, there is provided an operation such that the electric powers of the electric signals composed of the plurality of frequency components in the frequency band between the low frequency band side and the high frequency band side each obtained by reducing the maximum gain in the critical coupling state by the predetermined gain are synthesized with one another.

In addition, according to another embodiment of the present invention there is provided an electric power transmitting system including: an electric power supplying apparatus including: a resonance circuit having an inductance and a capacitance; and an electric power synthesizing circuit configured to synthesize electric powers of electric signals composed of a plurality of frequency components in a neighborhood frequency band as a frequency band near a resonance frequency decided by the inductance and the capacitance with one another, and output a resulting electric signal obtained through the electric power synthesis to the resonance circuit; and an electric power receiving apparatus including a resonance circuit configured to receive an electric power through a magnetic field resonance with the resonance circuit of the electric power supplying apparatus. As a result, there is provided an operation such that the electric signal of the plurality of frequency components obtained through the electric power synthesis of the electric signals composed of the plurality of frequency components in the electric power synthesizing circuit is outputted to the resonance circuit, thereby supplying the electric power to the electric power receiving apparatus through the coupling caused by the magnetic field resonance between the resonance circuit of the electric power supplying apparatus and the resonance circuit of the electric power receiving apparatus.

In addition, according to still another embodiment of the present invention, there is provided an electric power transmitting system including: an electric power supplying apparatus including: a first resonance circuit having an inductance and a capacitance; a plurality of frequency generators configured to generate electric signals composed of a plurality of frequency components in a neighborhood frequency band as a frequency band near a resonance frequency decided by the inductance and the capacitance; an electric power synthesizing circuit configured to synthesize electric powers of the electric signals composed of the plurality of frequency components generated from the plurality of frequency generators, respectively, and output the resulting electric signal obtained through the electric power synthesis to the first resonance circuit; a receiving portion configured to receive frequency information representing a frequency component (s) which is(are) determined to be unnecessary of the plurality of frequency components generated from the plurality of frequency generators, respectively; and a frequency generator controlling portion configured to carry out control in such a way that the frequency generator(s) which generates(generate) the electric signal(s) composed of the frequency component(s) which is(are) determined to be unnecessary of the plurality of frequency generators is(are) stopped in accordance with the frequency information; and an electric power receiving apparatus including: a second resonance circuit configured to receive an electric power from the electric power supplying apparatus through the magnetic field resonance; a frequency information creating portion configured to determine the frequency component(s) to become unnecessary in accordance with levels of the frequency components in the electric signal outputted from the second resonance circuit, thereby creating the frequency information; and a transmitting portion configured to transmit the frequency information created by the frequency information creating portion to the electric power supply apparatus. As a result, there is provided an operation such that the frequency component(s) to become unnecessary is(are) determined in accordance with the levels of the frequency components in the electric signal outputted from the second resonance circuit, and the frequency generator(s) which generates(generate) the electric signal(s) composed of the frequency component(s) determined to be unnecessary of the plurality of frequency generators is(are) stopped in accordance with the frequency information representing the frequency component(s) determined to be unnecessary.

As set forth hereinabove, according to the present invention, it is possible to offer the superior effect that the reduction of the transmission efficiency of the electric power in the tight coupling state between the resonance circuits.

BRIEF DESCRIPTION OF THE DRAWINGS

FIG. 1 is a block diagram, partly in circuit, showing a configuration of an electric power transmitting system according to a first embodiment of the present invention;

FIGS. 2A and 2B are respectively an equivalent circuit of resonance circuits, and a graphical representation representing coupling characteristics due to magnetic field coupling between the resonance circuits operating a double tuning circuit in the first embodiment of the present invention;

FIGS. 3A to 3C are respectively graphical representations each relating to the electric power transmitted in a critical coupling state in the first embodiment of the present invention;

FIGS. 3D to 3F are respectively graphical representations each relating to the electric power transmitted to an electric power receiving apparatus in a tight coupling state in the first embodiment of the present invention;

FIG. 4 is a block diagram, partly in circuit, showing a configuration of an electric power transmitting system according to a second embodiment of the present invention;

FIG. 5 is a block diagram, partly in circuit, showing a first change of the electric power supplying apparatus in the first embodiment of the present invention;

FIG. 6 is a block diagram, partly in circuit, showing a second change of the electric power supplying apparatus in the first embodiment of the present invention; and

FIG. 7 is a block diagram, partly in circuit, showing a third change of the electric power supplying apparatus in the first embodiment of the present invention.

DETAILED DESCRIPTION OF THE PREFERRED EMBODIMENTS

The preferred embodiments of the present invention will be described in detail hereinafter with reference to the accompanying drawings. It is noted that the description will be given in accordance with the following order.

1. First Embodiment (an electric power supplying technique: an embodiment in which an electric power is supplied by using a plurality of frequency generators).

2. Second Embodiment (frequency control: an embodiment in which an unnecessary frequency generator(s) is(are) stopped).

3. Changes in Configuration of the Electric Power Supplying Apparatus in the first embodiment.

1. First Embodiment

Configuration of Electric Power Transmitting System

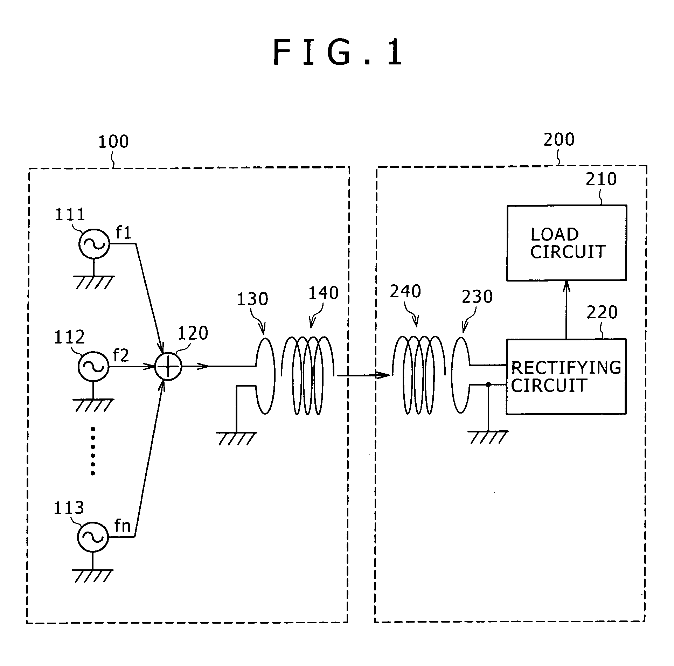

FIG. 1 is a block diagram, partly in circuit, showing a configuration of an electric power transmitting system according to a first embodiment of the present invention. This electric power transmitting system includes an electric power supplying apparatus 100 and an electric power receiving apparatus 200. Here, the electric power supplying apparatus 100 supplies an electric power by using coupling caused by a magnetic field resonance. Also, the electric power receiving apparatus 200 receives the electric power from the electric power supplying apparatus 100. In this case, a movable body such as a robot which moves to an arbitrary place by receiving electric power from the electric power supplying apparatus 100 is supposed as the electric power receiving apparatus 200. For this reason, a distance between the electric power supplying apparatus 100 and the electric power receiving apparatus 200 in the electric power transmitting system changes.

The electric power supplying apparatus 100 includes frequency generators 111 to 113, an electric power synthesizing circuit 120, a coupling coil 130, and a resonance circuit 140. In addition, the electric power receiving apparatus 200 includes a load circuit 210, a rectifying circuit 220, a coupling coil 230, and a resonance circuit 240. It should be noted that the electric power supplying apparatus 100 and the electric power receiving apparatus 200 stated herein are merely examples of an electric power supplying apparatus and an electric power receiving apparatus described in the appended claims, respectively.

The frequency generators 111 to 113 respectively generate electric signals composed of frequency components different from one another in a neighborhood frequency band as a frequency band near a resonance frequency of the resonance circuit 140. That is to say, the frequency generators 111 to 113 respectively generate the electric powers for supply to the electric power receiving apparatus 200. Also, the frequency generators 111 to 113 respectively generate the electric signals composed of frequency components having a first frequency f1, a second frequency f2 and an n-th frequency fn in the neighborhood frequency band near the resonance frequency of the resonance circuit 140.

Each of the frequency generators 111 to 113, for example, is realized in the form of a Colpitts oscillation circuit, a Hartley oscillation circuit or the like. In addition, the frequency generators 111 to 113 output the electric powers of the electric signals generated thereby, respectively, to the electric power synthesizing circuit 120. It should be noted that the frequency generators 111 to 113 stated herein are merely examples of a plurality of frequency generators described in the appended claims, respectively.

The electric power synthesizing circuit 120 serves to synthesize the electric powers of the electric signals outputted from a plurality of frequency generators 111 to 113, respectively, with one another. In addition, the electric power synthesizing circuit 120 outputs the electric signal composed of a plurality of frequency components and obtained through the synthesis of the electric powers of the electric signals composed of a plurality of frequency components and outputted from a plurality of frequency generators 111 to 113, respectively, to a coupling coil 130. It should be noted that the electric power synthesizing circuit 120 stated herein is merely an example of an electric power synthesizing circuit descried in the appended claims.

The coupling coil 130 is an inductor through which the resonance circuit 140 and the electric power synthesizing circuit 120 are coupled to each other. The coupling coil 130 is provided in order to obtain impedance matching between the electric power synthesizing circuit 120 and the resonance circuit 140, thereby preventing reflection of the electric signal. The coupling coil 130, for example, is realized in the form of a coil. In addition, the coupling coil 130 outputs the electric signal supplied thereto from the electric power synthesizing circuit 120 in accordance with an electromagnetic induction operation. It should be noted that the coupling coil 130 stated herein is merely an example of an inductor described in the appended claims.

The resonance circuit 140 is a circuit for mainly generating a magnetic field in accordance with the electric signal outputted from the coupling coil 130. The resonance circuit 140 has an inductance and a capacitance. The resonance circuit 140, for example, is realized in the form of a coil. In this case, an inter-line capacitance of the coil plays a part as the capacitance. The resonance circuit 140 has the highest strength of the magnetic field at a resonance frequency. This resonance frequency is decided by the inductance and the capacitance which the resonance circuit 140 has. It should be noted that the resonance circuit 140 stated herein is merely an example of each of a resonance circuit and a first resonance circuit in an electric power supplying apparatus each described in the appended claims.

The resonance circuit 240 is a circuit for receiving the electric power from the electric power supplying apparatus 100 through magnetic field coupling caused by the magnetic field resonance between the resonance circuit 240 concerned and the resonance circuit 140. The resonance circuit 240 has an inductance and a capacitance. The resonance circuit 240 has a resonance frequency equal to that of the resonance circuit 140. In addition, the resonance circuit 240 outputs the electric power of the electric signal generated through the magnetic field coupling between the resonance circuit 240 concerned and the resonance circuit 140 to the coupling coil 230. It should be noted that the resonance circuit 240 stated herein is merely an example of each of a resonance circuit and a second resonance circuit in an electric power receiving apparatus each described in the appended claims.

The coupling coil 230 is an inductor through which the resonance circuit 240 and the rectifying circuit 220 are coupled to each other. The coupling coil 230 is provided in order to obtain the impedance matching between the rectifying circuit 220 and the resonance circuit 240, thereby preventing the reflection of the electric signal. The coupling coil 230, for example, is realized in the form of a coil. In addition, the coupling coil 230 supplies an A.C. voltage as an electric signal generated in accordance with the electromagnetic induction operation with the resonance circuit 240 to the rectifying circuit 220.

The rectifying circuit 220 serves to rectify the A.C. voltage supplied thereto from the coupling coil 230, thereby creating a D.C. voltage as a power source voltage. The rectifying circuit 220 supplies the power source voltage thus created to the load circuit 210.

The load circuit 210 serves to receive the power source voltage from the rectifying circuit 220, thereby carrying out a given operation. The load circuit 210, for example, receives the power source voltage from the rectifying circuit 220, thereby moving the electric power receiving apparatus 200 to an arbitrary place.

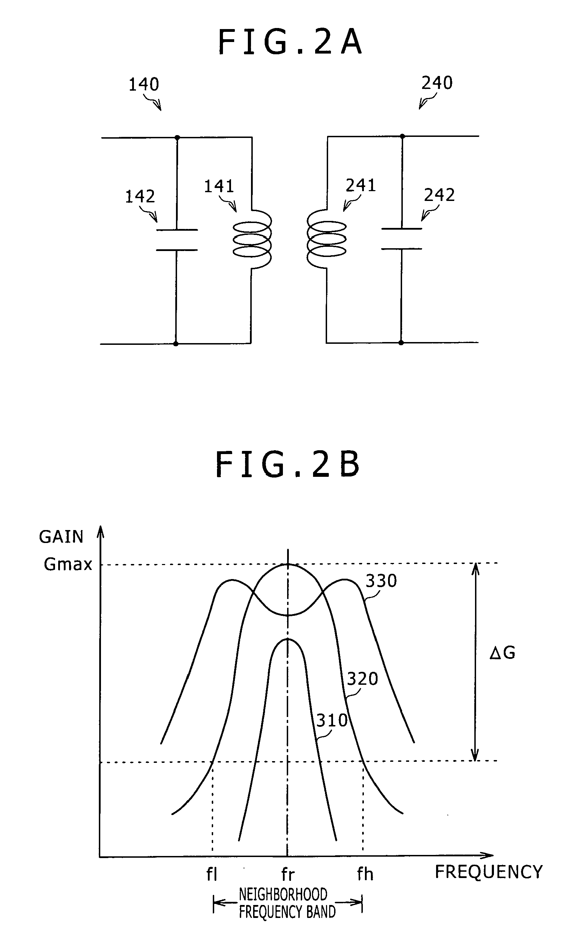

As has been described, the electric power of the electric signal composed of a plurality of frequency components in the neighborhood frequency band near the resonance frequency can be supplied from the electric power supplying apparatus 100 to the electric power receiving apparatus 200 through the coupling caused by the magnetic field resonance between the resonance circuits 140 and 240. Here, a description will be given below with respect to the coupling caused by the magnetic field resonance between the resonance circuits 140 and 240 with reference to FIGS. 2A and 2B.

Example of Coupling Characteristics between Resonance Circuits

FIGS. 2A and 2B are figures relating to the coupling caused by the magnetic field resonance between the resonance circuits 140 and 240 in the first embodiment of the present invention.

FIG. 2A is the figure exemplifying an equivalent circuit of the resonance circuits 140 and 240. Inductors 141 and 241, and capacitors 142 and 242 are shown in FIG. 2A. The inductors 141 and 241 are elements having respective inductances. Also, the capacitors 142 and 242 are elements having respective capacitances.

The resonance circuit 140 is composed of the inductor 141 and the capacitor 142. A resonance frequency of the resonance circuit 140 is determined by the inductance of the inductor 141 and the capacitance of the capacitor 142. In addition, the resonance circuit 240 is composed of the inductor 241 and the capacitor 242. A resonance frequency of the resonance circuit 240 is determined by the inductance of the inductor 241 and the capacitance of the capacitor 242. It is noted that in this case, for the purpose of enhancing a transmission efficiency of the electric power, the resonance frequencies of the resonance circuits 140 and 240 are adjusted so as to be identical to each other.

As has been described, the resonance circuits 140 and 240 can be equivalently expressed by the inductors 141 and 241, and the capacitors 142 and 242. The reason for this is because the resonance circuits 140 and 240 operate as a double tuning circuit since the resonance circuits 140 and 240 have the same equivalent circuit as that of the double tuning circuit. For this reason, the coupling between the resonance circuits 140 and 240 can be expressed by a general index S representing the coupling state in the double tuning circuit as shown in Expression (1):

$$S = \kappa \sqrt{Q1 \cdot Q2} \quad \ldots \quad (1)$$

where Q1 and Q2 are performance indices of the resonance circuits 140 and 240, respectively, and are coefficients representing the sharpness of the peaks in the frequency characteristics, of the strengths of the magnetic fields, which the resonance circuits 140 and 240 have, respectively, and $\kappa$ is a coupling coefficient. In the first embodiment of the present invention, the performance indices Q1 and Q2 become constants, respectively, because the frequency characteristics, of the strengths of the magnetic fields, which the resonance circuits 140 and 240 have, respectively, are determined in advance. Also, the coupling coefficient $\kappa$ shown in Expression (1) is expressed by Expression (2):

$$\kappa = \frac{M}{\sqrt{L1 \cdot L2}} \quad \ldots \quad (2)$$

where L1 and L2 are the inductances of the inductors 141 and 241, respectively, and M is a mutual inductance and changes depending on a distance between the resonance circuits 140 and 240. For example, the mutual inductance M becomes large as the distance between the resonance circuits 140 and 240 becomes shorter. In the first embodiment of the present invention, the coupling coefficient $\kappa$ changes depending on the distance between the resonance circuits 140 and 240 because the inductances L1 and L2 are set in advance.

As has been described, the general index S expressed by Expression (1) changes depending on the distance between the resonance circuits 140 and 240 because the general index S is proportional to the coupling coefficient $\kappa$. That is to say, the general index S becomes large as the distance between the resonance circuits 140 and 240 becomes shorter.

FIG. 2B is a graphical representation exemplifying the coupling characteristics between the resonance circuits 140 and 240 operating as the double tuning circuit. In this case, there are shown loose coupling characteristics 310, critical coupling characteristics 320, and tight coupling characteristics 330. In addition, an axis of abscissa represents a frequency, and an axis of ordinate represents a gain.

The loose coupling characteristics 310 are frequency characteristics showing a coupling state between the resonance circuits 140 and 240 when the general index S representing the coupling state between the resonance circuits 140 and 240 is smaller than "1." In this case, such a coupling state is referred to as "a loose coupling state." The loose coupling characteristics 310 show single peak characteristics in which the gain becomes maximum at a resonance frequency fr of each of the resonance circuits 140 and 240.

The critical coupling characteristics 320 are frequency characteristics showing a coupling state between the resonance circuits 140 and 240 when the general index S representing the coupling state between the resonance circuits 140 and 240 is "1." In this case, such a coupling state is referred to as a critical coupling state. The critical coupling characteristics 320 show single peak characteristics in which the gain Gmax at the resonance frequency fr becomes maximum. At this time, the maximum gain at the resonance frequency fr becomes largest. That is to say, when the resonance frequencies fr of the resonance circuits 140 and 240 agree with each other, and when the critical coupling state is obtained, the gain at the resonance frequency fr becomes maximum.

The tight coupling characteristics 330 are frequency characteristics showing a coupling state between the resonance circuits 140 and 240 when the general index S is larger than "1." In this case, such a coupling state is referred to as "a tight coupling state." The tight coupling characteristics 330 show double peak characteristics in which the resonance frequency fr lies in a valley between two peaks.

In this way, with regard to the coupling characteristics between the resonance circuits 140 and 240, the frequency characteristics change depending on the magnitude of the general index S. As has been described, the magnitude of the general index S changes depending on the distance between the resonance circuits 140 and 240 because it is proportional to the magnitude of the coupling coefficient $\kappa$. For this reason, as the distance between the resonance circuits 140 and 240 becomes shorter, with regard to the coupling characteristics obtained between the resonance circuits 140 and 240, the general index S becomes large, so that the coupling state between the resonance circuits 140 and 240 transits from the loose coupling state to the critical coupling state. Moreover, when the distance between the resonance circuits 140 and 240 becomes too short, the coupling state between the resonance circuits 140 and 240 transits from the critical coupling state to the tight coupling state to show the double peak characteristics.

For this reason, in the case where the electric signal composed of only the frequency component having the frequency identical to the resonance frequency fr is outputted to the resonance circuit 140, thereby supplying the electric power to the electric power receiving apparatus 200, when the distance between the resonance circuits 140 and 240 becomes too short, the coupling state becomes the tight coupling state, and thus the gain at the resonance frequency fr is reduced. As a result, the transmission efficiency when the electric power is transmitted from the electric power supplying apparatus 100 to the electric power receiving apparatus 200 is reduced.

For the purpose of suppressing such reduction of the transmission efficiency caused by the tight coupling state between the resonance circuits 140 and 240, in the first embodiment of the present invention, the electric signal composed of a plurality of frequency components in the neighborhood frequency band near the resonance frequency fr is supplied to the resonance circuit 140. As a result, it is possible to suppress the reduction of the transmission efficiency of the electric power in the tight coupling state. Here, the neighborhood frequency band, as described with reference to FIG. 1, means the frequency band having the neighborhood of the resonance frequency fr as the center thereof. Thus, the neighborhood frequency band is such a frequency band that the reduction of the transmission efficiency of the electric power caused by the tight coupling state can be suppressed by supplying the electric signal composed of a plurality of frequency components to the resonance circuit 140. The neighborhood frequency band is preferably set in the frequency band between the frequencies near the hoots on the both sides of the mountain having the resonance frequency fr as the top in the critical coupling characteristics 320.

The neighborhood frequency band can be decided as a frequency band between a lower side frequency f1 and a higher side frequency fh each corresponding to a gain obtained by reducing the maximum gain Gmax in the critical coupling state caused by the magnetic field resonance between the resonance circuits 140 and 240 by a predetermined gain $\Delta G$. The neighborhood frequency band, for example, may also be decided as a frequency band between a lower side frequency and a higher side frequency each corresponding to a gain obtained by reducing the maximum gain Gmax by a predetermined gain of 3dB, 5dB, 10dB or 20dB in accordance with frequency intervals of a plurality of frequency components or the coupling characteristics. It should be noted that the neighborhood frequency band stated herein is merely an example of a neighborhood frequency band described in the appended claims.

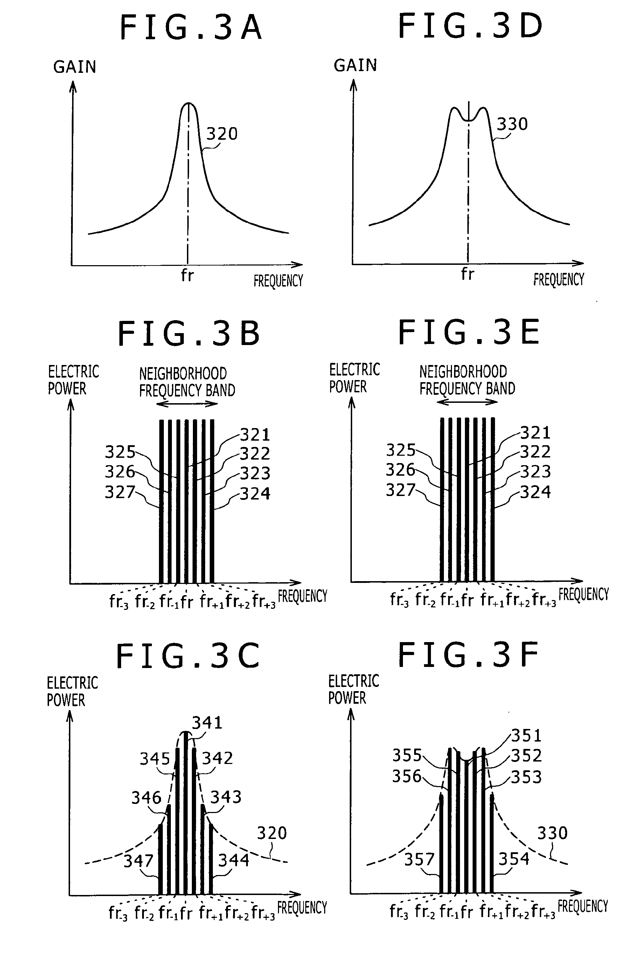

Next, the transmission efficiency of the electric power when the electric signal composed of a plurality of frequency components in the neighborhood frequency band is supplied to the resonance circuit 140 will be described in brief with reference to FIGS. 3A to 3F.

Example of Suppression of Reduction of Electric Power Transmission Efficiency

FIGS. 3A to 3F are respectively graphical representations each conceptually exemplifying the electric power which is transmitted through the coupling caused by the magnetic field resonance between the resonance circuits 140 and 240 in the first embodiment of the present invention. That is, FIG. 3A to 3C are respectively graphical representations each relating to the electric power which is transmitted to the electric power receiving apparatus 200 in the critical coupling state. Also, FIGS. 3D to 3F are respectively graphical representations each relating to the electric power which is transmitted to the electric power receiving apparatus 200 in the tight coupling state. In FIGS. 3A to 3F, an axis of abscissa represents the frequency.

The critical coupling characteristics 320 and tight coupling characteristics 330 each shown in FIG. 2B are shown in FIGS. 3A and 3D, respectively. The frequency characteristics of the electric signals each supplied to the resonance circuit 140 are shown in FIGS. 3B and 3E, respectively. In this case, the electric powers of the electric signals composed of frequency components $fr_{-3}$ 327 to $fr_{+3}$ 324 (321 to 327) in the neighborhood frequency band are created by the frequency generators 111 to 113, respectively. Also, it is supposed that the electric signal obtained through the synthesis in the electric power synthesizing circuit 120 is supplied to the resonance circuit 140 through the coupling coil 130. In addition, in FIGS. 3B and 3E, an axis of ordinate represents the electric power of the electric signal supplied to the resonance circuit 140.

For the purpose of facilitating the understanding, the frequency characteristics obtained by making the critical coupling characteristics 320 and the tight coupling characteristics 330 shown in FIGS. 3A and 3D overlap the frequency characteristics shown in FIGS. 3B and 3E, respectively, are shown in FIGS. 3C and 3F, respectively. In addition, in FIGS. 3C and 3F, an axis of ordinate represents the electric power of the electric signal outputted from the resonance circuit 240.

FIG. 3C shows the frequency components $fr_{-3}$ 347 to $fr_{+3}$ 344 (341 to 347) of the electric signal outputted from the resonance circuit 240 in the critical coupling stare. The frequency components $fr_{-3}$ 347 to $fr_{+3}$ 344 (341 to 347) have the respective levels corresponding to the critical coupling characteristics 320. That is to say, the electric power of the electric signal shown in FIG. 3B becomes the electric power of the electric signal composed of the frequency components $fr_{-3}$ 347 to $fr_{+3}$ 344 (341 to 347) in accordance with the coupling characteristics caused by the magnetic field resonance between the resonance circuits 140 and 240, and is then supplied to the electric power receiving apparatus 200.

FIG. 3F shows frequency components $fr_{-3}$ 357 to $fr_{+3}$ 354 (351 to 357) of the electric signal outputted from the resonance circuit 240 in the tight coupling state. The frequency components $fr_{-3}$ 357 to $fr_{+3}$ 354 (351 to 357) have the respective levels corresponding to the tight coupling characteristics 330. That is to say, the electric power of the electric signal shown in FIG. 3E becomes the electric power of the electric signal shown in FIG. 3F in accordance with the coupling characteristics caused by the magnetic field resonance between the resonance circuits 140 and 240, and is then supplied to the electric power receiving apparatus 200. In this way, since the electric signal has a plurality of frequency components, even when the coupling between the resonance circuits 140 and 240 becomes the tight coupling state to reduce the gain in the resonance frequency fr 351, the supply of the electric power is complemented by other frequency components.

In this way, the electric signal composed of a plurality of frequency components $fr_{-3}$ 327 to $fr_{+3}$ 324 (321 to 327) in the neighborhood frequency band is supplied to the resonance circuit 140, thereby making it possible to lighten the reduction of the transmission efficiency of the electric power in the tight coupling state. That is to say, even when the distance between the resonance circuits 140 and 240 becomes too short and thus the magnetic field coupling becomes the tight coupling state, it is possible to suppress the reduction of the transmission efficiency of the electric power in the tight coupling state. It is noted that in the first embodiment of the present invention, the electric signal containing therein the frequency component(s) which does(do) not contribute to the supply of the electric power to the electric power receiving apparatus 200 so much is supplied to the electric power receiving apparatus 200 depending on the distance between the resonance circuits 140 and 240 in some cases. Thus, an electric power transmitting system which is obtained by improving the electric power transmitting system of the first embodiment for the purpose of reducing the frequency component(s) not contributing to the supply of the electric power to the electric power receiving apparatus 200 will be described in detail hereinafter in the form of a second embodiment of the present invention.

2. Second Embodiment

Configuration of Electric Power Transmitting System

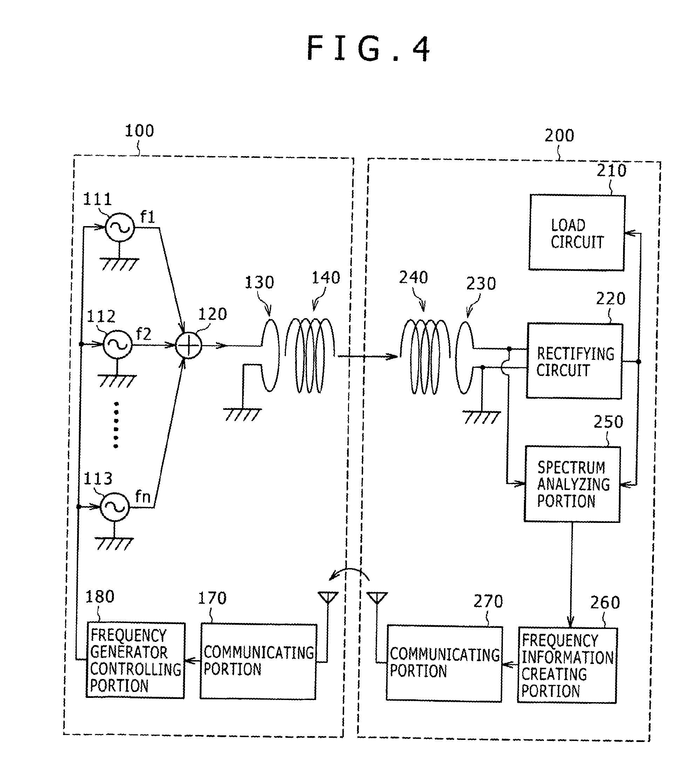

FIG. 4 is a block diagram, partly in circuit, showing a configuration of an electric power transmitting system according to a second embodiment of the present invention. This electric power transmitting system includes the electric power supplying apparatus 100 and the electric power receiving apparatus 200 similarly to the case of the electric power transmitting system of the first embodiment. The electric power supplying apparatus 100 includes a communicating portion 170 and a frequency generator controlling portion 180 in addition to the constituent elements of the electric power supplying apparatus 100 of the first embodiment shown in FIG. 1. In addition, the electric power receiving apparatus 200 includes a spectrum analyzing portion 250, a frequency information creating portion 260, and a communicating portion 270 in addition to the constituent elements of the electric power receiving apparatus 200 of the first embodiment shown in FIG. 1. In this case, the same constituent elements of the electric power transmitting system of the second embodiment shown in FIG. 4 as those of the electric power transmitting system of the first embodiment shown in FIG. 1 are designated by the same reference numerals, respectively, and a description thereof is omitted here for the sake of simplicity.

In the second embodiment of the present invention, it is supposed that the electric powers of the electric signals composed of the frequency components different from one another generated by the frequency generators 111 to 113, respectively, are synthesized by the electric power synthesizing circuit 120, and the resulting electric signal obtained through the synthesis in the electric power synthesizing circuit 120 is outputted to the resonance circuit 140 through the coupling coil 130. In this case, the electric power of the electric signal outputted from the resonance circuit 240 through the magnetic field resonance caused between the resonance circuits 140 and 240 is supplied to each of the rectifying circuit 220 and the spectrum analyzing portion 250 through the coupling coil 230. In addition, a power source voltage obtained through the rectification in the rectifying circuit 220 is supplied to each of the load circuit 210 and the spectrum analyzing portion 250.

The spectrum analyzing portion 250 serves to calculate the frequency components of the electric signal supplied from the coupling coil 230, and electric power levels of the frequency components. That is to say, the spectrum analyzing portion 250, for example, calculates the frequency components of the electric signal, and electric power levels of the frequency components by using Fast Fourier Transform (FFT). The spectrum analyzing portion 250 supplies the calculation results to the frequency information creating portion 260.

The frequency information creating portion 260 serves to determine the frequency component(s) to become unnecessary as the frequency component(s) not contributing to the supply of the electric power so much in accordance with the calculation results calculated by the spectrum analyzing portion 250. That is to say, the frequency information creating portion 260, for example, determines the frequency component(s) to become unnecessary in accordance with an absolute level threshold value set in advance, and the levels of the frequency components. In the second embodiment of the present invention, the frequency information creating portion 260 determines the frequency component(s) having the level(s) (each) lower than the absolute level threshold value as the frequency component(s) to become unnecessary.

With regard to another determination example, the frequency information creating portion 260 determines the frequency component(s) to become unnecessary by using the level of the frequency component having the highest electric power level of a plurality of frequency components calculated by the spectrum analyzing portion 250 as a reference level. For example, an electric power difference threshold value is provided in the frequency information creating portion 260 in advance. Thus, the frequency information creating portion 260 determines the frequency component(s) with which a difference between the reference level and (each of) the electric power level(s) is larger than the electric power difference threshold value as the necessary frequency component(s). Or, an electric power ratio threshold value is provided in the frequency information creating portion 260 in advance. Thus, the frequency information creating portion 260 determines the frequency component(s) with which a ratio between the reference level and (each of) the electric power level(s) is larger than the electric power ratio threshold value as the unnecessary frequency component(s).

In addition, the frequency information creating portion 260 creates frequency information representing the value (s) of the frequency component(s) determined to be the frequency component(s) to become unnecessary. That is to say, the frequency information creating portion 260 determines the frequency component(s) to become unnecessary in accordance with the levels of the frequency components of the electric signal outputted from the resonance circuit 240, thereby creating the frequency information. Also, the frequency information creating portion 260 supplies the frequency information thus created to the communicating portion 270. It should be noted that the frequency information creating portion 260 is merely an example of a frequency information creating portion described in the appended claims.

The communicating portion 270 serves to carry out communication between the communicating portion 270 concerned and the communicating portion 170 in the electric power supplying apparatus 100. The communicating portion 270 transmits the frequency information created by the frequency information creating portion 260 to the communicating portion 170. It should be noted that the communicating portion 270 is merely an example of a transmitting portion described in the appended claims.

The communicating portion 170 carries out communication between the communicating portion 170 concerned and the communicating portion 270 in the electric power receiving apparatus 200. The communicating portion 170 receives the frequency information transmitted thereto from the communicating portion 270 in the electric power receiving apparatus 200. Also, the communicating portion 170 supplies the frequency information thus received thereat to the frequency generator controlling portion 180. It should be noted that the communicating portion 170 is merely an example of a receiving portion described in the appended claims. In addition, the communication established between the communicating portions 270 and 170, for example, is realized in the form of wireless communication such as Bluetooth.

The frequency generator controlling portion 180 carries out the control in such a way that the frequency generator (s) which generates(generate) the electric signal(s) composed of the frequency component(s) determined to be unnecessary of a plurality of frequency generators 111 to 113 is(are) stopped in operation(s) thereof in accordance with the frequency information supplied thereto from the communicating portion 170. That is to say, the frequency generator controlling portion 180 specifies the frequency generator(s) corresponding to the value(s) of the frequency component (s) determined to be unnecessary and represented in the frequency information in accordance with the value(s) of the frequency component(s) concerned. Also, the frequency generator controlling portion 180 stops the operations of the frequency generator(s) thus specified thereby, thereby stopping the electric signal(s) generated from the frequency generator(s)(, respectively). It should be noted that the frequency generator controlling portion 180 is merely an example of a frequency generator controlling portion described in the appended claims.

That is to say, the frequency information creating portion 260 is provided in order to determine the frequency component(s) to become unnecessary in accordance with the levels of the frequency components of the electric signal outputted from the resonance circuit 240, thereby making it possible to delete the frequency component(s) to become unnecessary. As a result, it is possible to suppress the power consumption of the electric power supplying apparatus 100 because it is possible to reduce the generation of the wasteful electric signal(s) by the frequency generators 111 to 113.

It is noted that although in the second embodiment of the present invention, the description has been given with respect to the case where the operation(s) of the frequency generator(s) for generating the signal(s) having the frequency component(s) determined to be unnecessary is(are) stopped, there is also conceivable the case where the distance between the electric power supplying apparatus 100 and the electric power receiving apparatus 200 becomes long, so that there is lack in the supplied electric power. For this reason, the operation(s) of the frequency generator(s) which has(have) been stopped from the reason that the frequency component(s) of its(their) electric signal(s) was(were) determined to be unnecessary may be made to generate the electric signal(s) again after a lapse of a given time period.

Or, the total electric power of the electric signal supplied from the coupling coil 230 is measured by the spectrum analyzing portion 250. Also, when the total electric power thus measured becomes lower than a given level, emergency information in accordance with which all the frequency generators are caused to generate the electric signals, respectively, may be created. In this case, the frequency generator controlling portion 180 carries out the control in such a way that the electric signal(s) is(are) generated from the frequency generator(s) which has(have) been stopped in accordance with the emergency information.

In addition, although in each of the first and second embodiments of the present invention, the description has been given with respect to the case where by providing a plurality of frequency generators 111 to 113, the electric signal composed of a plurality of frequency components in the neighborhood frequency band near the resonance frequency is supplied to the resonance circuit 140, the present invention is by no means limited thereto. Hereinafter, a description will be given with respect to changes of the electric power supplying apparatus in the first embodiment in each of which the electric signal having a plurality of frequency components is created with another configuration.

3. Changes of Electric Power Supplying Apparatus in First Embodiment

First Change using Electric Signal having Spectrum Spread

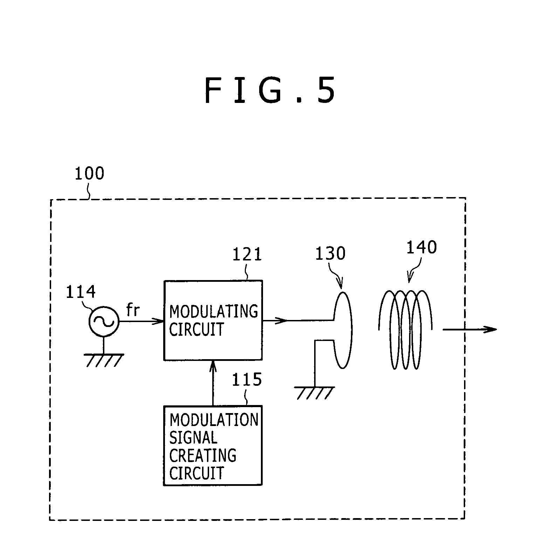

FIG. 5 is a block diagram, partly in circuit, showing a configuration of a first change of the electric power supplying apparatus 100 in the first embodiment of the present invention. The electric power supplying apparatus 100 of the first change includes a frequency generator 114, a modulation signal creating circuit 115, and a modulating circuit 121 instead of including a plurality of frequency generators 111 to 113, and the electric power synthesizing circuit 120 each shown in FIG. 1. Since in the first change of the first embodiment, the coupling coil 130 and the resonance circuit 140 are the same as those shown in FIG. 1, the coupling coil and the resonance circuit are designated by the same reference numerals 130 and 140, respectively, a description thereof is omitted here for the sake of simplicity.

The frequency generator 114 serves to generate an electric signal composed of a given frequency component. The frequency generator 114, for example, creates an electric power of the electric signal composed of the frequency component having the same frequency as the resonance frequency fr of the resonance circuit 140. In addition, the frequency generator 114 supplies the electric power of the electric signal thus generated thereby to the modulating circuit 121. It should be noted that the frequency generator 114 is merely an example of a frequency generator described in the appended claims.

The modulation signal creating circuit 115 serves to create a modulation signal in accordance with which the electric signal generated from the frequency generator 114 is modulated. The modulation signal creating circuit 115, for example, creates a Pseudorandom Noise Code for spectrum spread as the modulation signal. In addition, the modulation signal creating circuit 115 supplies the modulation signal thus created thereby to the modulating circuit 121. It should be noted that the modulation signal creating circuit 115 is merely an example of a modulation signal creating circuit described in the appended claims.

The modulating circuit 121 serves to synthesize the electric powers of the electric signals composed of a plurality of frequency components and created in accordance with both the electric power of the electric signal generated from the frequency generator 114, and the modulation signal created by the modulation signal creating circuit 115. The modulating circuit 121, for example, multiplies the electric signal generated from the frequency generator 114 by the pseudorandom noise code created by the modulation signal creating circuit 115, thereby creating the electric signal composed of a plurality of frequency components in the neighborhood frequency band near the resonance frequency fr. That is to say, the modulating circuit 121 spreads the spectrum in the electric signal generated by the frequency generator 114, thereby creating the electric signal composed of a plurality of frequency components in the neighborhood frequency band near the resonance frequency fr. In addition, the modulating circuit 121 outputs the resulting electric signal obtained through the synthesis to the coupling coil 130. It should be noted that the modulating circuit 121 is merely an example of the electric power synthesizing circuit described in the appended claims.

As has been described, the provision of the modulating circuit 121 makes it possible to spread the spectrum of the electric signal in the neighborhood frequency band near the resonance frequency fr. As a result, even when the coupling between the resonance circuits 140 and 240 becomes the tight coupling state, so that the coupling characteristics change, it is possible to suppress the reduction of the efficiency of the electric power transmission.

It is noted that although in the first change of the first embodiment, the description has been given with respect to the case where the spectrum spread is carried out by the modulating circuit 121, the present invention is by no means limited thereto. That is to say, the electric signal generated by the frequency generator 114 may be either amplitude-modulated or phase-modulated, thereby creating the electric signal composed of a plurality of frequency components in the neighborhood frequency band near the resonance frequency fr. In this case, the modulation signal creating circuit 115 creates the modulation signal so that the spectrum in the electric signal outputted from the modulating circuit 121 is spread in the neighborhood frequency band.

Second Change Using Electric Signal Created in Digital Processing

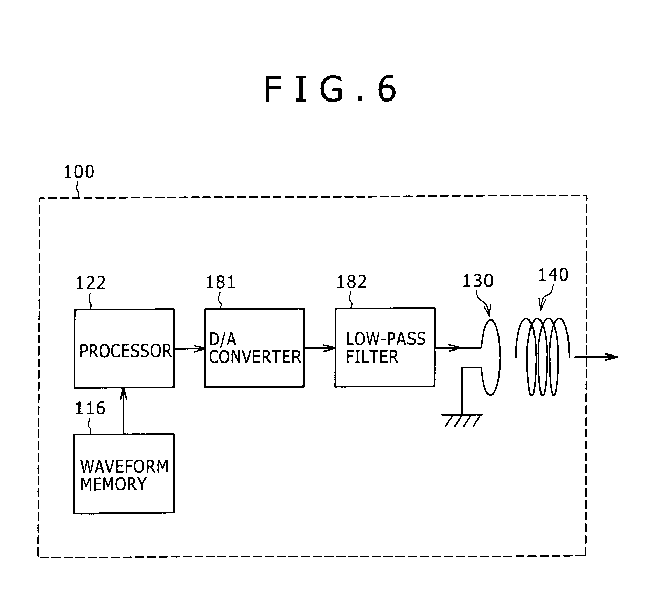

FIG. 6 is a block diagram, partly in circuit, showing a configuration of a second change of the electric power supplying apparatus 100 in the first embodiment of the present invention. The electric power supplying apparatus 100 of the second change includes a waveform memory 116, a processor 122, a digital to analog (D/A) converter 181, and a low-pass filter 182 instead of including a plurality of frequency generators 111 to 113, and the electric power synthesizing circuit 120 each shown in FIG. 1. Since in the second change of the first embodiment, the coupling coil 130 and the resonance circuit 140 are the same as those shown in FIG. 1, the coupling coil and the resonance circuit are designated by the same reference numerals 130 and 140, respectively, and a description thereof is omitted here for the sake of simplicity.

The waveform memory 116 serves to hold therein waveform creation data in accordance with which a waveform signal is created in order to generate the electric signal composed of a plurality of a plurality of frequency components in the neighborhood frequency band near the resonance frequency fr. The waveform memory 116 supplies the waveform creation data held therein to the processor 122.

The processor 122 serves to create the waveform signal as a digital signal in accordance with the waveform creation data held in the waveform memory 116. That is to say, the processor 122 creates the waveform signal for the purpose of synthesizing the electric signals composed of a plurality of frequency components with one another. The processor 122 supplies the resulting waveform signal thus created thereby to the D/A converter 181.

The D/A converter 181 serves to convert the waveform signal as the digital signal supplied thereto from the processor 122 into an analog signal, thereby creating the electric signal composed of a plurality of frequency components. The D/A converter 181 supplies the resulting electric signal thus created thereby to the low-pass filter 182.

The low-pass filter 182 is a filter for removing a highfrequency component contained in the waveform signal created by the processor 122. In addition, the low-pass filter 182 supplies the electric signal obtained by removing the highfrequency component from the waveform signal to the coupling coil 130.

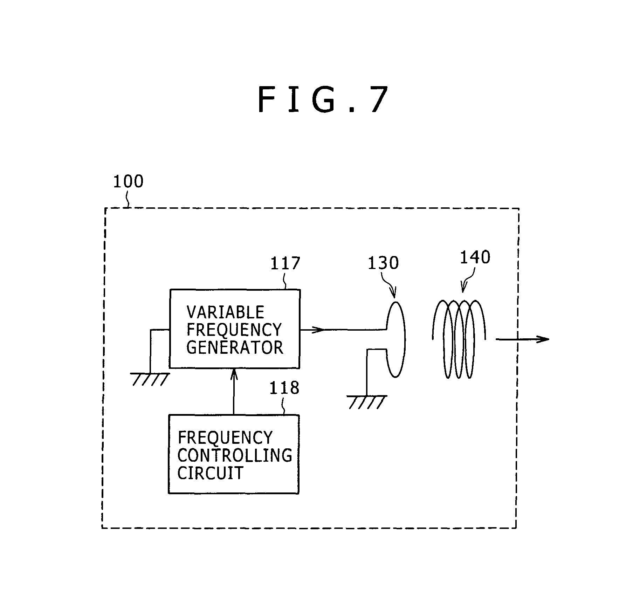

In this way, the provision of the waveform memory 116, the processor 122 and the D/A converter 181 makes it possible to create the same electric signal as that created by the electric power supplying apparatus 100 having the configuration shown in FIG. 1. It is noted that although the description has been given with respect to the case where the electric signal composed of a plurality of frequency components is created, thereby suppressing the reduction of the transmission efficiency of the electric power, a single frequency component may be changed within the neighborhood frequency band, thereby relaxing the reduction of the transmission efficiency in the tight coupling state. Hereinafter, a description will be given with respect to a third change of the electric power supplying apparatus 100 in the first embodiment of the present invention in which a single frequency component is changed within the neighborhood frequency band with reference to FIG. 7.

Third Change Using Electric Signal in Which Single Frequency Component is Changed

FIG. 7 is a block diagram, partly in circuit, showing the third change of the electric power supplying apparatus 100 in the first embodiment of the present invention. The electric power supplying apparatus 100 includes a variable frequency generator 117 and a frequency controlling circuit 118 instead of including a plurality of frequency generators 111 to 113, and the electric power synthesizing circuit 120 each shown in FIG. 1. Since in the third change of the first embodiment, the coupling coil 130 and the resonance circuit 140 are the same as those shown in FIG. 1, the coupling coil and the resonance circuit are designated by the same reference numerals 130 and 140, respectively, and a description thereof is omitted here for the sake of simplicity.

The variable frequency generator 117 serves to generate an electric signal composed of a single frequency component. The variable frequency generator 117 changes the frequency component of the electric signal generated thereby within the neighborhood frequency band in accordance with a control signal supplied thereto from the frequency controlling circuit 118. The variable frequency generator 117, for example, is realized in the form of a Voltage Controlled Oscillator (VOC). In addition, the variable frequency generator 117 supplies the resulting electric signal generated thereby to the coupling coil 130.

The frequency controlling circuit 118 serves to create a control signal in accordance with which the frequency component of the electric signal generated from the variable frequency generator 117 is changed within the neighborhood frequency band. When the variable frequency generator 117 is the voltage controlled oscillator, the frequency controlling circuit 118, for example, is realized in the form of a voltage controlled circuit. In addition, the frequency controlling circuit 118 supplies the control signal created thereby to the variable frequency generator 117.

In this way, the provision of the variable frequency generator 117 and the frequency controlling circuit 118 makes it possible to change the frequency component of the electric signal supplied to the resonance circuit 140 so as to fall within the neighborhood frequency band. As a result, even when the distance between the resonance circuits 140 and 240 becomes too short, it is possible to relax the reduction of the transmission efficiency of the electric power.

As has been described, according to the embodiments of the present invention, even when the coupling due to the magnetic field resonance caused between the resonance circuits 140 and 240 becomes the tight coupling state, it is possible to suppress the reduction of the transmission efficiency of the electric power.

It should be noted that the embodiments of the present invention show merely examples for embodying the present invention, and thus have the correspondence relationships with the matters, specifying the present invention, within the scope of the appended claims, respectively. However, the present invention is by no means limited to the embodiments described above, and various changes can be made without departing from the gist of the present invention.

The present application contains subject matter related to that disclosed in Japanese Priority Patent Application JP 2009-045190 filed in the Japan Patent Office on February 27, 2009, the entire content of which is hereby incorporated by reference.

**Claims**

1. An electric power supplying apparatus, comprising:

   a resonance circuit having an inductance and a capacitance; and
   an electric power synthesizing circuit configured to synthesize electric powers of electric signals composed of a plurality of frequency components in a neighborhood frequency band as a frequency band near a resonance frequency decided by the inductance and the capacitance with one another, and output a resulting electric signal obtained through the electric power synthesis to said resonance circuit.

2. The electric power supplying apparatus according to claim 1, further comprising
   an inductor through which said resonance circuit and said electric power synthesizing circuit are coupled to each other.

3. The electric power supplying apparatus according to claim 2, further comprising
   a plurality of frequency generators configured to generate the electric signals composed of the plurality of frequency components in the neighborhood frequency band, and output the electric powers of the electric signals thus generated to said electric power synthesizing circuit.

4. The electric power supplying apparatus according to claim 2, further comprising:

   a frequency generator configured to generate an electric signal composed of a frequency component in the neighborhood frequency band, and output an electric power of the electric signal thus generated to said electric power synthesizing circuit; and
   a modulation signal creating circuit configured to create a modulation signal in accordance with which the electric signal generated from said frequency generator is modulated,
   wherein said electric power synthesizing circuit synthesizes the electric powers of the electric signals composed of the plurality of frequency components created in accordance with the electric power of the electric signal outputted from said frequency generator, and the modulation signal created by said modulation signal creating circuit.

5. The electric power supplying apparatus according to anyone of claims 1 to 4, wherein the neighborhood frequency band is a frequency band between a low frequency band side and a high frequency band side each obtained by reducing a maximum gain in a critical coupling state caused by a magnetic field resonance between said resonance circuit and a resonance circuit in an electric power receiving apparatus by a predetermined gain.

6. An electric power transmitting system, comprising:

   an electric power supplying apparatus including
   a resonance circuit having an inductance and a capacitance, and
   an electric power synthesizing circuit configured to synthesize electric powers of electric signals composed of a plurality of frequency components in a neighborhood frequency band as a frequency band near a resonance frequency decided by the inductance and the capacitance with one another, and output a resulting electric signal obtained through the electric power synthesis to said resonance circuit; and

an electric power receiving apparatus including

a resonance circuit configured to receive an electric power through a magnetic field resonance with said resonance circuit of said electric power supply apparatus.

7. An electric power transmitting system, comprising:

an electric power supplying apparatus including

a first resonance circuit having an inductance and a capacitance,

a plurality of frequency generators configured to generate electric signals composed of a plurality of frequency components in a neighborhood frequency band as a frequency band near a resonance frequency decided by the inductance and the capacitance,

an electric power synthesizing circuit configured to synthesize electric powers of the electric signals composed of the plurality of frequency components generated from said plurality of frequency generators, respectively, and output the resulting electric signal obtained through the electric power synthesis to said first resonance circuit,

a receiving portion configured to receive frequency information representing a frequency component(s) which is(are) determined to be unnecessary of the plurality of frequency components generated from said plurality of frequency generators, respectively, and

a frequency generator controlling portion configured to carry out control in such a way that the frequency generator(s) which generates(generate) the electric signal(s) composed of the frequency component(s) which is(are) determined to be unnecessary of said plurality of frequency generators is(are) stopped in accordance with the frequency information; and

an electric power receiving apparatus including

a second resonance circuit configured to receive an electric power from said electric power supplying apparatus through the magnetic field resonance,

a frequency information creating portion configured to determine the frequency component(s) to become unnecessary in accordance with levels of the frequency components in the electric signal outputted from said second resonance circuit, thereby creating the frequency information, and

a transmitting portion configured to transmit the frequency information created by the frequency information creating portion to said electric power supplying apparatus.

# F I G . 1

# FIG.2A

# FIG.2B

# FIG.3A

# FIG.3D

# FIG.3B

# FIG.3E

# FIG.3C

# FIG.3F

# FIG.4

# F I G . 5

# FIG.6

100

122    181    182    130    140

PROCESSOR → D/A CONVERTER → LOW-PASS FILTER →

116

WAVEFORM MEMORY

# F I G . 7

Europäisches
Patentamt

European
Patent Office

Office européen
des brevets

## EUROPEAN SEARCH REPORT

**Application Number**

EP 10 00 1285

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2008/278264 A1 (KARALIS ARISTEIDIS [US] ET AL) 13 November 2008 (2008-11-13) * the whole document * | 1-7 | INV. H01Q9/04 H02J7/02 |
| A | WO 2008/145982 A2 (AMWAY EUROP LTD [GB]; FELLS JULIAN ANDREW JOHN [GB]) 4 December 2008 (2008-12-04) * the whole document * | 1-7 | |
| A | US 2008/049372 A1 (LOKE SIEW LING [GB]) 28 February 2008 (2008-02-28) * the whole document * | 1-7 | |
| A | US 2004/145342 A1 (LYON GEOFF M [US]) 29 July 2004 (2004-07-29) * the whole document * | 1-7 | |

**TECHNICAL FIELDS SEARCHED      (IPC)**

H01Q
H02J

The present search report has been drawn up for all claims

| Place of search | Date of completion of the search | Examiner |
|---|---|---|
| The Hague | 13 July 2010 | Moumen, Abderrahim |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 10 00 1285

This annex lists the patent family members relating to the patent documents cited in the above-mentioned European search report.
The members are as contained in the European Patent Office EDP file on
The European Patent Office is in no way liable for these particulars which are merely given for the purpose of information.

13-07-2010

| Patent document cited in search report | | Publication date | Patent family member(s) | | Publication date |
|---|---|---|---|---|---|
| US 2008278264 | A1 | 13-11-2008 | US | 2009224856 A1 | 10-09-2009 |
| | | | US | 2010117456 A1 | 13-05-2010 |
| | | | US | 2010171370 A1 | 08-07-2010 |
| WO 2008145982 | A2 | 04-12-2008 | EP | 2160822 A2 | 10-03-2010 |
| | | | US | 2010172168 A1 | 08-07-2010 |
| US 2008049372 | A1 | 28-02-2008 | WO | 2008053369 A2 | 08-05-2008 |
| US 2004145342 | A1 | 29-07-2004 | EP | 1588468 A2 | 26-10-2005 |
| | | | JP | 4081126 B2 | 23-04-2008 |
| | | | JP | 2006517378 T | 20-07-2006 |
| | | | WO | 2004068726 A2 | 12-08-2004 |

EPO FORM P0459

For more details about this annex : see Official Journal of the European Patent Office, No. 12/82

**EP 2 224 538 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070222542 A

- JP 2009045190 A